# EUROPEAN PATENT SPECIFICATION

(11) **EP 2 297 918 B1**
(45) Date of publication and mention of the grant of the patent: **16.10.2019**
(21) Application number: 09774464.3
(22) Date of filing: 01.07.2009
(51) Int. Cl.: H04L 29/06, H04L 29/08, H04W 4/20, H04W 4/02

(54) **GENERAL PURPOSE MOBILE LOCATION-BLOGGING SYSTEM**
UNIVERSELLES MOBILES STANDORTBASIERTES BLOGSYSTEM
SYSTÈME MOBILE UNIVERSEL D' EMPLACEMENT DE BLOGAGE

(30) Priority: 02.07.2008 US 167206
(43) Date of publication of application: 23.03.2011
(73) Proprietor: TeleNav, Inc., Sunnyvale, CA 94086 (US)
(72) Inventor: YANG, Richard, Jingwen, Mountain View CA 94040 (US)
(74) Representative: Liesegang, Eva
(86) International application number: PCT/US2009/049440
(87) International publication number: WO 2010/003014

(56) References cited:
- US-A1- 2005 278 371
- US-A1- 2007 203 644
- US-A1- 2007 282 526
- US-A1- 2008 098 090
- WILLIAM BAMFORD, PAUL COULTON, REUBEN EDWARDS: "Location-based Mobile Blogging" INFORMATION AND COMMUNICATION TECHNOLOGIES, 2006. ICTTA '06. 2ND, [Online] vol. 1, 16 October 2006 (2006-10-16), pages 111-116, XP002552083 Damascus ISBN: 0-7803-9521-2 Retrieved from the Internet: URL:http://ieeexplore.ieee.org/stamp/stamp .jsp?tp=&arnumber=1684354&isnumber=35470> [retrieved on 2009-11-23]

## Description

### TECHNICAL FIELD

The present invention relates generally to a location based service system, and more particularly to a general purpose mobile location-blogging system.

### BACKGROUND ART

Modern portable consumer and industrial electronics, especially client devices such as navigation systems, cellular phones, digital cameras, video recorders, portable digital assistants, data logging instrumentation and combination devices, are providing increasing levels of functionality to support modern life including location-based information services. Numerous technologies have been developed to utilize this new functionality. Some of the research and development strategies focus on new technologies while others focus on improving the existing and mature technologies. Research and development in the existing technologies can take a myriad of different directions.

As users become more empowered with the growth of mobile location based service devices, new and old paradigms begin to take advantage of this new device space. There are many technological solutions to take advantage of this new device location opportunity. One existing approach is to add location information to user generated content such as digital photo files on a digital phone camera or other recording device. However, the ability for users to simply add location information to content files does not automatically translate to being an effective means of managing location-specific user generated content. An effective means to manage and store and use such images is still required.

For example, typical uses for location sensitive multimedia information can include a hiker want to identify and comment upon a meandering stream in a mountain valley, a fisherman needs to identify and log fishing records of a particular location at sea, a oil exploration team needs to log exploration data about a location, or a visitor to an amusement park can want to information about which have the best views.

The document "Location-based Mobile Blogging", W. Bamford; P. Coulton; R. Edwards, 2006, 2nd International Conference on Information and Communication Technologies: Damascus, Syria, 24 - 28 April 2006, refers to a mobile phone application which allows bloggers to update online blogs with conventional journal information, such as text and photos, alongside information relating to their geographical position. The user's position can be obtained directly, by connecting the application to a Bluetooth GPS receiver, or derived by linking their GSM Cell ID to location. The information gathered from the handset can be visualized by linking the data to tracking paths using Google Maps API, or more complex analysis. Thus, the locations at which the user sent blog information become 'markers', which, when opened, display the blog information associated with that position.

US2007/203644A1 refers to integrating map technology with social networks so that individuals can select members of the respective communities with which to communicate based at least in part on their location, referred to as geo-based messaging. Thus, a mapping system generates maps based in part on geo-based input and/or a geo-based query in a social network/communication environment. The system includes a tag component that can tag incoming data or input from a user with geo-code data such as coordinates relating to the user's location, for example corresponding to the user's most recent message posting. To view a subject user's location as well as the locations of other users in the social network community, a mapping component generates a map view based on a selected focal point, e.g. the user's location, such as to provide a visualization of the focal point location and any existing blogs (or members) within a set distance from the focal point. Alternatively, the blogs can be browsed according to their subject matter and/or by their location, for example by selecting a city, state, or country to view the blogs located therein.

US2008/098090A1 relates to mapping using web-based content, for example to allow a user to view one or more blogs about a particular location by moving a map display to the particular location. Thus, blogs can be used as a diary regarding a particular location, for example, a particular café. Tags are used to add contextual information about the nature of a content, such as, for example, the core tags: What, Where and When. In this way, a user can select certain search criteria, (e.g., blogs about Silicone Valley, Calif.) so that only content meeting the particular criteria are displayed. A search routine will search for content meeting the criteria and the system will filter only those that meet the search criteria.

US2007282526A1 relates to enabling users to receive or form a geoblog, wherein the geoblog represents a blog relating to a geographic location. For this purpose, a user device is operable to retrieve a geoblog utilizing the current geographic location of the device and user input, and to display at least a portion of the retrieved geoblog. Moreover, the display can be operable to present a listing of a plurality of pre-defined comments, such as to allow the user device to form a geoblog utilizing the current geographic location of the device and a selected pre-defined comment. Alternatively, the user device can form a geoblog utilizing the current geographic location of the device, and automatically title the formed geoblog utilizing the name of the identified geographic entity read from a database. US 2005278371 discloses a geographic location bookmarking method that comprises communicating geo-referential information from a mobile device to a stationary server, and maintaining a database of information in a spatially and temporally organized manner.

Thus, a need remains for a mobile location based blogging system to efficiently create, populate and manage location-based blogs and to make the process of creating new User Generated Content for those location-blogs. In view of the ever-increasing added features desired by consumers in their mobile client devices, it is more and more critical that answers be found to these problems.

Solutions to these problems have been long sought but prior developments have not taught or suggested any solutions and, thus, solutions to these problems have long eluded those skilled in the art.

### DISCLOSURE OF THE INVENTION

The present invention provides a method of operation of a general purpose mobile location-blogging system according to claim 1. Further embodiments of the invention are defined by the dependent claims.

### BRIEF DESCRIPTION OF THE DRAWINGS

FIG. 1 illustrates a mobile location-blog system in an embodiment of the present invention;
FIG. 2 is a block diagram of the general purpose mobile location-blogging system of FIG. 1;
FIG. 3 is a flow chart of the general purpose mobile location-blogging system of FIG. 1;
FIG. 4 is a flow chart of the client of the general purpose mobile location-blogging system of FIG. 1;
FIG. 5 is a flow chart of the server of the general purpose mobile location-blogging system of FIG. 1;
FIG. 6A, 6B, 6C and 6D are illustrations of an example of retrieving a list of location-blogs and browsing location-blog entries by the client with the general purpose mobile location-blogging system of FIG. 1 for location-blogs B1 and B2;
FIG. 7A, 7B, 7C, 7D, 7E, and 7F are illustrations of an example of retrieving a list of location-blogs and browsing location-blog entries by the client with the general purpose mobile location-blogging system of FIG. 1 for location-blogs B3 and B4; and
FIG. 8 is a flow chart of a method of operation of the general purpose mobile location-blogging system in a further embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes can be made without departing from the scope of the present invention.

In the following description, numerous specific details are given to provide a thorough understanding of the invention. However, it can be apparent that the invention can be practiced without these specific details. In order to avoid obscuring the present invention, some well-known circuits, system configurations, and process steps are not disclosed in detail. Likewise, the drawings showing embodiments of the system are semi-diagrammatic and not to scale and, particularly, some of the dimensions are for the clarity of presentation and are shown greatly exaggerated in the drawing FIGs. The term "system" as used herein means and refers to the method and to the apparatus of the present invention in accordance with the context in which the term is used.

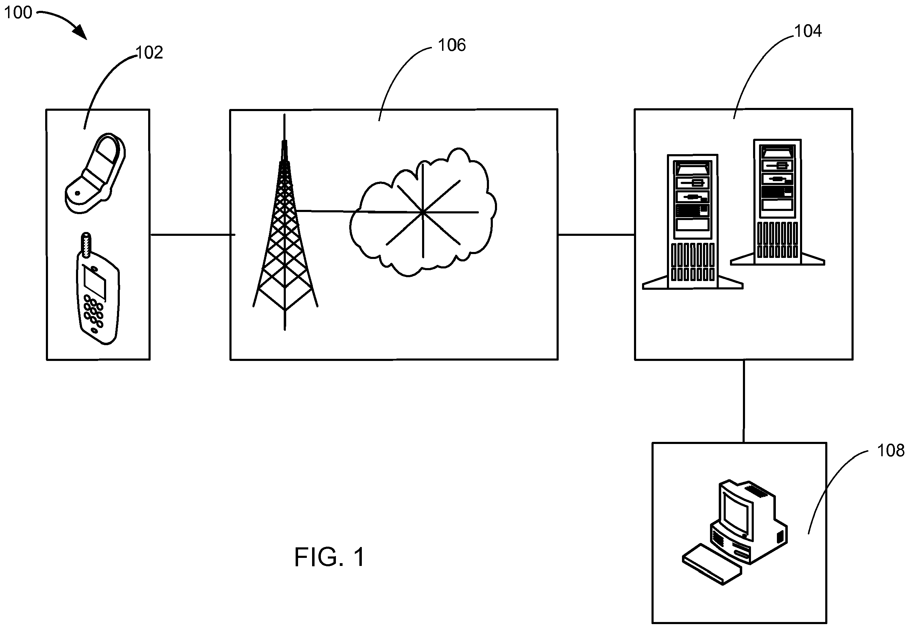

Referring now to FIG. 1, therein is illustrated a general purpose mobile location-blogging system 100 in an embodiment of the present invention. A client 102 is connected to a communication path 106, such as a wireless telecommunication network, to a server 104. As used herein, the client 102 can be of any of a variety of mobile devices, such as a cellular phone, personal digital assistant, digital imaging device, a notebook computer, or other multifunctional mobile communication or entertainment devices having means to couple to a communication path to communicate with a server and means for client location monitoring, preferably, global positioning system (GPS) function.

The client 102 includes, for example, a control device (not shown), such as a microprocessor, software (not shown), a memory (not shown), communication components (not shown), location monitoring components (not shown), and a user interface. The user interface, such as a display, a key pad, touchpad, softkeys, keyboard, a microphone, and a speaker, allows the user to interact with the client 102 and to provide data and command inputs. The microprocessor executes the software and provides the intelligence of the client 102 for interaction with the server 104 for relevant information, for the user interface, for interaction with the communication path 106, and interaction to the location monitoring system of the client 102, as well as other functions pertinent to a location based service communication device.

The memory, such as volatile, nonvolatile memory, internal only, externally upgradeable, or a combination thereof, can store the software, setup data, multimedia data, photos, text, sounds recordings, video and other data for the operation of the client 102 as a mobile location based service communication device. The memory can also store the relevant information, such as maps, route information, traffic information, advertisement and point of interest (POI), location-blog entries, etc., from the server 104 or can be preloaded. The memory can also store recorded, imaged, sampled or created relevant information to be transmitted to the server 104.

For example, the functions of the client 102 can be performed by software, firmware, hardware, or a combination thereof. The communication components can include active and passive components, such as microelectronics or an antenna, for interaction to the cellular system of the communication path 106. The navigation components can include the active and passive components, such as microelectronics or an antenna, for interaction with the communication path 106.

The communication path 106 can be of any of a variety of telecommunication networks. For example, the communication path 106 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 106. Ethernet, digital subscriber line (DSL), fiber to the home (FTTH), and plain old telephone service (POTS) are examples of wired communication that can be included in the communication path 106.

Further, the communication path 106 can traverse a number of network topologies and distances. For example, the communication path 106 can include personal area network (PAN), local area network (LAN), metropolitan area network (MAN), and wide area network (WAN).

The server 104 can include a number of devices, for example, a control device (not shown), such as a computer, software (not shown), a memory, communication components (not shown), location monitoring components (not shown), and a user interface. The computer executes the software and provides the intelligence of the server 104 for interaction with the client 102, interaction to the communication system of the communication path 106 and interaction with a server user interface 108.

For illustrative purposes, the server 104 is shown in a single location, although it is understood that the server can be located at different locations. For example, the server 104 can represent servers in a single computer room, and distributed across different rooms or geographical locations. Also for illustrative purposes, the server 104 and the server user interface 108 are shown as separate and discrete components, although it is understood that the server user interface 108 can by included in the server 104.

Further for illustrative purposes, the server user interface 108 is shown coupled to the server 104, although it is understood that the server user interface 108 can couple to the server 104 differently. For example, the server user interface 108 can interact with the communication path 106 to communicate with the server 104.

Yet further for illustrative purposes, the general purpose mobile location-blogging system 100 is shown with the server 104 as a non-mobile computing device, although it is understood that the server 104 can be different types of computing devices. For example, the server 104 can also be a mobile computing device, such as notebook computer, another client device, or a different type of client device.

Yet further for illustrative purposes, the general purpose mobile location-blogging system 100 is shown with the server 104 and the client 102 as end points of the communication path 106, although it is understood that the general purpose mobile location-blogging system 100 can have a different partition between the client 102, the server 104, and the communication path 106. For example, the client 102, the server 104, or a combination thereof can also function as part of the communication path 106.

The server 104 includes a location-blog which is a location-sensitive, multimedia blog data store that allows users to create, populate and manage location-based blogs that are specific to a particular location and can include a variety of information related to that location. Location-blogs are essentially location-based scratchpads where information including video, audio, images, text, cartographic information, physical property measurements, depth soundings, fish and wildlife census information, chemical and pollution measurements, weather information, or other measured or instrumentation data can be stored, associated with a particular location, and retrieved on demand.

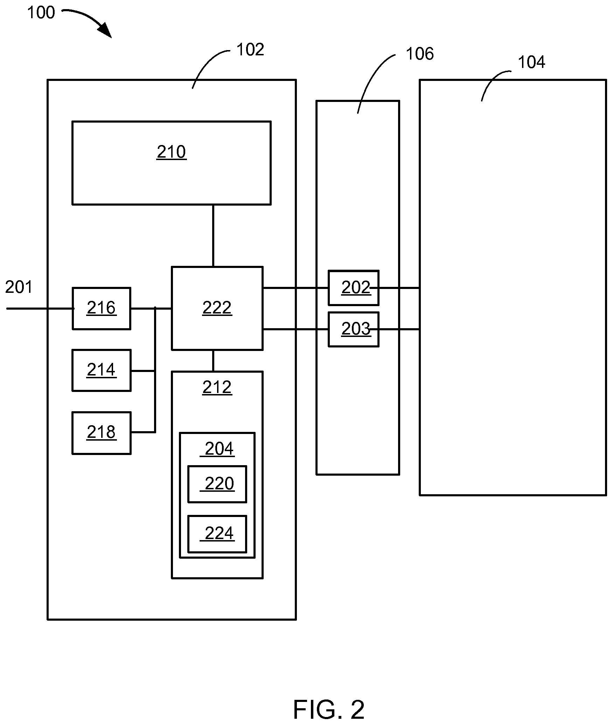

Referring now to FIG. 2, therein is shown a block diagram of the general purpose mobile location-blogging system 100 of FIG. 1. The client 102 sends a server request 202 to the server 104 via the communication path 106. In response to the server request 202, the client 102 receives a server response 203 having location-blog entry parameters 204 from the server 104 over the communication path 106.

Each of the location-blog entry parameters 204 can include a location-blog control parameter 220 and a location-blog data parameter 224 for controlling a multimedia display interface 210 of the client 102. For example, the multimedia display interface 210 can display associated location and the location-blog data parameter 224 received by the client 102 from the server 104 via the communication path 106.

Also, the location-blog entry parameters 204 can control the multimedia display interface 210 in association with a variety of location and navigation events. For example, the multimedia display interface 210 can display images, video, text, or audio of selected location-blog entries notifying a user of nearby location-blog coordinates based upon location of the client 102, navigation directions to POIs associated with a location-blog, and display of additional messaging. The additional messaging can include traffic or navigation data associated with the location blog, the POI, or advertisements, as an example.

Further, the location-blog entry parameters 204 can include any number of parameters. For example, the location-blog entry parameters 204 can include system ID, client ID, device type, location-blog ID, location, datetime stamp, geofence parameters, range, content tags, multimedia data, or any combination thereof.

The client 102 can store the location-blog entry parameters 204 in a local storage 212. The local storage 212 can be implemented in a number of ways. For example, the local storage 212 can be a nonvolatile storage such as non-volatile random access memory (NVRAM), Flash memory, disk storage or a volatile storage such as static random access memory (SRAM). The client 102 can retrieve a current set of the location-blog entry parameters 204 possibly when the multimedia display interface 210 is refreshed.

The client 102 can accept a user input 201 via a user interface 216, such as a key entry, to interact with the location-blog using a variety of command and data methods. Examples of command and data methods include creating a new location-blog, selecting an active location-blog, selecting a location-blog entry, browsing for nearby location-blogs, generating user content, sending content to the server 104, receiving location-blog content from the server 104, navigating within a selected location-blog, or any combination thereof.

The user input 201 can also be associated with multimedia data from a multimedia data unit 214 that can provide multimedia data inputs including digital images, audio recordings, video recordings, text inputs, other multimedia inputs, or any combination thereof. The user input 201 can also be associated with the current location information from a location unit 218, such as a navigation hardware. The user input 201 in association with multimedia data from the multimedia data unit 214 and the current location information from the location unit 218 can be processed by a control device 222, such as a processor or a specialized hardware engine, which can generate the server request 202 from the client 102 to the server 104.

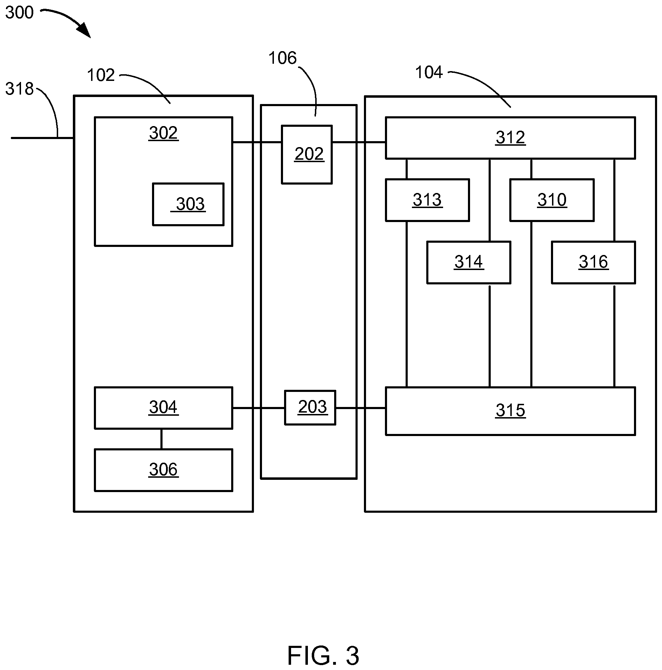

Referring now to FIG. 3, therein shown is a flow chart 300 of the general purpose mobile location-blogging system 100 of FIG 1. The client 102 preferably receives, manually or automatically, a location-blog request 318 from the user interface 216 selecting a one or more location-blogs from a textual or graphical list of location-blogs and sends the server request 202 to the server 104 in a block 302. The server request 202 can include a location-blog command information 303.

The client 102 preferably receives the location-blog request 318 from the user interface 216 and sends the server request 202 to the server 104 in the block 302. Based on the location-blog request 318, the server request 202 can include the location-blog command information 303. The location-blog command information 303 can include a create location-blog command, an update location-blog command, a fetch location-blog information command, and a manage location-blog command, or other location-blog data and management command structures.

The server 104 receives the location-blog command information 303 from the client 102. The server 104 can decode the location-blog command information 303 and can perform the appropriate command function in a block 312. The create location-blog command can cause the server 104 to initiate the creating a new location-blog. The update location-blog command can cause the server 104 to update the location-blog with the multimedia content included. The fetch location-blog information command can cause the server 104 to retrieve and return a set of location-blog information about one or more location-blogs that fit specified criteria. The manage location-blog command can cause the server 104 to perform a variety of functions related to managing and maintaining a specified location-blog. For example, once a command is completed, status information and location-blog information can be sent from the server 104 to the client 102 in a block 315.

The server request 202 with the create location-blog command from the block 312 can include location-blog header data that can be used to create a new location-blog in a block 313. The location-blog header data can include system ID, user ID, location ID, location tag, blog property information, multimedia content, text, video, images, audio, or any combination thereof. Location-blogs include blogs based on information pertaining to a particular location and whose entries are primarily indexed by location and time. The create location-blog command can be processed by the server 104 creating a new location-blog as specified by the location-blog header data on the server 104. The server 104 can send the server response 203 from the block 315 including a location-blog command status to the client 102 upon completion of the create location-blog command in the block 313.

The server request 202 with the update location-blog command from the block 312 can include multimedia data for creating a location-blog entry in a block 314. The location-blog entry includes a multimedia entry that can be retrieved by the client 102. The update location-blog command can be processed by the server 104 and can automatically create a location-blog post for the specified location-blog. The server 104 can send the server response 203 including a location-blog command status, from the block 314, to the client 102 upon completion of the update location-blog command in the block 315.

The server request 202 with a fetch location-blog information command from the block 312 can include a location-blog retrieval request that can cause the server 104 to retrieve and return one or more of the location-blog entry parameters 204 of FIG. 2 in a block 310. The server 104 can send the server response 203 including the location-blog entry parameters 204, from the block 310, to the client 102 via the communication path 106 in the block 315. The location-blog entry parameters 204 can include any number of parameters, such as text, images, audio, video, location parameters, date, time, duration, control actions, display parameters or any combination thereof.

The server request 202 with the manage location-blog command from the block 312 can include any number of utility commands to control the server 104 for managing the specified location-blog in a block 316. The manage location-blog commands can include a variety of functions including delete location-blog entry, modify location-blog entry, delete location-blog, edit location-blog header information, copy location-blog, move location-blog, modify location-blog status, or any combination thereof. The server 104 can send the server response 203 including the location-blog command status, from the block 316, to the client 102 upon completion of the manage location-blog command in the block 315.

The client 102 receives the server response 203 including the location-blog entry parameters 204 from the server 104 over the communication path 106 in a block 304. The client 102 preferably detects the location-blog control parameter 220 in FIG. 2 for use with the location-blog entry parameters 204 from the server response 203 from the block 304 and operates the multimedia display interface 210 of FIG. 2 of the client 102 in a block 306.

The client 102 also receives the server response 203 including the location-blog status updates from the server 104 over the communication path 106 in the block 304. The client 102 detects the location-blog control parameter 220 for use with the location-blog status from the server response 203 and operates the multimedia display interface 210 of FIG. 2 of the client 102 in the block 306.

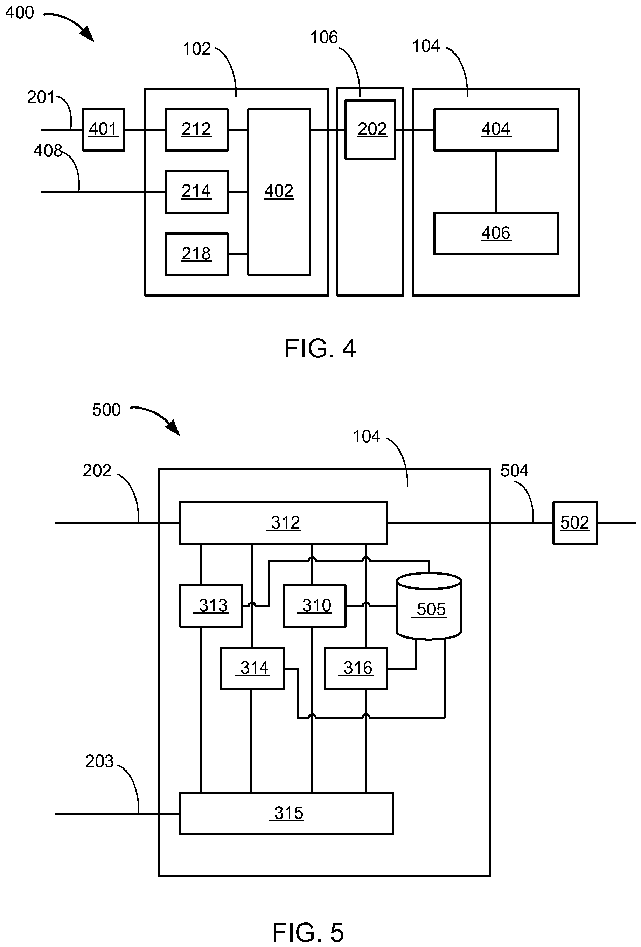

Referring now to FIG. 4, therein shown is a flow chart 400 of the client 102 of the general purpose mobile location-blogging system 100 of FIG. 1. For example, the client 102 can operate in a location-blog update mode determined by the location-blog command received in the user input 201. The client 102 preferably receives the update location-blog command, through the block 312 of FIG. 3, from the user input 201 and a location-blog multimedia content input 408 from the multimedia data unit 214 in FIG. 2 and the current location information from the location unit 218 in FIG. 2.

The client 102 sends, in a block 402, the server request 202 with a location-blog command input 401 and the location-blog multimedia content input 408 via the communication path 106 of FIG. 1 to the server 104. The server 104 received the server request 202 in a block 404 and updates the location-blog in a block 406.

The location-blog multimedia content input 408 is associated with the current location-blog which is associated with the current location of the client 102. The location-blog multimedia content input 408 can include any number of multimedia parameters, such as video recordings, audio recordings, images, text, time, date, or any combination thereof.

For example, the client 102 can include a digital video camera which makes an audiovisual recording at the current location. The location-blog command input 401 can control the client 102 to send the server request 202 with an update location-blog command from the block 312 and the associated audiovisual recording data to the server 104 via the communication path 106. The client 102 can also include a digital camera and send the server request 202 including the digital image from the camera to the server 104.

As another example, the client 102 can receive the location-blog command input 401 from the user input 201 and send the server request 202 including a manage location-blog command, from the block 312, to the server 104 to request the deletion of the current location-blog.

Referring now to FIG. 5, therein shown is a flow chart 500 of the server 104 of the general purpose mobile location-blogging system 100 of FIG. 1. For example, the server 104 preferably receives the server request 202 from the client 102 of FIG. 1 via the communication path 106 of FIG. 1 in the block 312. The server request 202 can include the location-blog command information 303 from the block 312 of FIG. 3, such as the create location-blog command, the update location-blog command, the fetch location-blog information command, or the manage location-blog commands. The server 104 can send the location-blog entry parameters 204 based on the location-blog command information 303 from the client 102.

The server 104 can process the server request 202 with the Create New Location-Blog command, from the block 312, in the block 313. The server request 202 can include additional parameters to define and create the new location-blog including parameters such as system ID, client ID, location ID, time, date, video, audio, images, text, multimedia data, command parameter, configuration parameters, security parameters, or any combination thereof. The server 104 can create a new location-blog and an associated location-blog storage entry in a data storage system 505 that can later be used to include the data for the location-blog entries.

The server 104 can process the server request 202 with the update location-blog command, from the block 312, in the block 314. The server request 202 can include additional parameters to update the specified location-blog including parameters such as location-blog ID, system ID, client ID, location ID, time, date, video, audio, images, text, multimedia data, command parameter, configuration parameters, security parameters, or any combination thereof. The server 104 can create a new location-blog entry and store the associated location-blog entry content in the data storage system 505. The location-blog entry can be later retrieved from the location-blog on the server 104 using the fetch location-blog information command from the block 312.

The server 104 can process the server request 202 with the fetch location-blog information command, from the block 312, in the block 310. The server request 202 can include additional parameters to define and create the new location-blog including parameters such as location-blog ID, location-blog entry ID, system ID, client ID, location ID, time, date, video, audio, images, text, multimedia data , command parameter, configuration parameters, security parameters, or any combination thereof. The server 104 can retrieve the location-blog entry parameters 204 of FIG. 2 associated with the specified location-blog entry ID in the specified location blog from the data storage system 505 and return it to the client 102. The server 104 can also retrieve the location-blog entry parameters 204 that are associated with one or more location-blogs from the data storage system 505 and return them to the client 102.

The server 104 can process the server request 202 with the manage location-blog command, from the block 312, in the block 316. The manage location-blog commands can include a variety of functions including delete location-blog entry, modify location-blog entry, delete location-blog, edit location-blog header information, copy location-blog, move location-blog, modify location-blog status, or any combination thereof. The server 104 can create a new location-blog entry and store the associated location-blog entry content in the data storage system 505. The location-blog entry can be later retrieved from the location-blog on the server 104 using the fetch location-blog information command from the block 312.

In operation, the server request 202 that includes the delete location-blog entry command from the block 312 can delete a specified location-blog entry from the specified location blog and from the data storage system 505. The server request 202 that includes an Edit Location-Blog Header command from the block 312 can modify a specified location-blog header for the specified location blog and from the data storage system 505.

The server request 202 that includes a copy location-blog command from the block 312 can copy a specified location-blog in the data storage system 505 to another location-blog in the data storage system 505 using a specified location-blog ID. The server request 202 that includes a move location-blog command from the block 312 can move a specified location-blog in the data storage system 505 to another location-blog in the data storage system 505 using a specified location-blog ID. The server request 202 that includes a modify location-blog status command can modify a specified location-blog status for the specified location blog in the data storage system 505.

In another example, the server 104 can receive a server user input 504 from the server user interface 108 of FIG. 1, including location-blog server management system commands 502 that can control the location-blog server system, perform housekeeping tasks, and generate reports showing data such as location-blog status, use, entry ratings, type of rating or any combination thereof.

It has been discovered that the present invention provides a general purpose mobile location-blogging system that allows user of clients to create, manage, delete, and select a specific or user selected location-blog. The location-blog can be one out of many location-blogs and can be user-defined allowing the general purpose location-blogs to be used as desired by the user of the client.

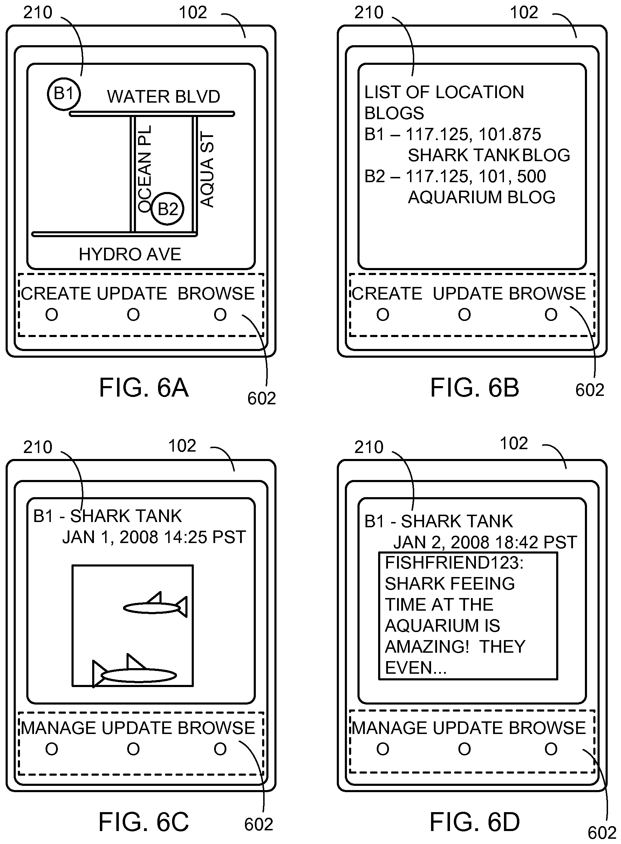

Referring now to FIG. 6A, 6B, 6C and 6D, therein are shown illustrations of an example of retrieving a list of location-blogs and browsing location-blog entries by the client 102 with the general purpose mobile location-blogging system 100 of FIG. 1 for general purpose location-blogs B1 and B2. FIG. 6A displays a street map on the multimedia display interface 210 of the client 102 of the general purpose mobile location-blogging system 100. In another example, FIG. 6B illustrates a set of general purpose location-blogs in a list format on the multimedia display interface 210 of the client 102.

For example, either location-blog can be made the current location-blog by selecting the appropriate location-blog using the input means. The client 102 can enter a location-blog selection using a user input control 602 which can include a control input, such as a button, dial, slider, voice input, touch pad, touch screen, virtual button, switch, keypad or similar input device.

In FIG. 6C and 6D, therein are illustrated the multimedia display interface 210 of a location-blog entry. For example, in an operation with update location-blog command, the client 102 can accept a location-blog command user input and a multimedia user input that can include a video recording, audio recording, image, text, multimedia data, or any combination thereof. The location-blog command and the multimedia data are sent to the server 104 of FIG. 2 in the server request 202 of FIG. 2. The server 104 can create a new location-blog entry that is associated with the new multimedia data.

For example in FIG. 6C, in the fetch location-blog information command, the client 102 can accept the location-blog command user input and send the fetch location-blog information command in the server request 202 to the server 104 via the communication path 106. The server 104 can retrieve the location-blog entry parameters 204 of FIG. 2 associated with the fetch location-blog information command and return them to the client 102. The client 102 can use the location-blog entry parameters 204 to control the multimedia display interface 210 and present the multimedia content of the specified location-blog entry on the multimedia display interface 210, wherein the multimedia content can include video, audio, images, text, other multimedia content, or any combination thereof.

In FIG. 6D, therein is illustrated, for example, a location-blog entry that includes textual multimedia content. It is understood that there are several scenarios where the client 102 can send the fetch location-blog information command in the server request 202 to the server 104 and the client 102 can receive one or more location-blog entries including any of several different multimedia data types to be shown on the multimedia display interface 210.

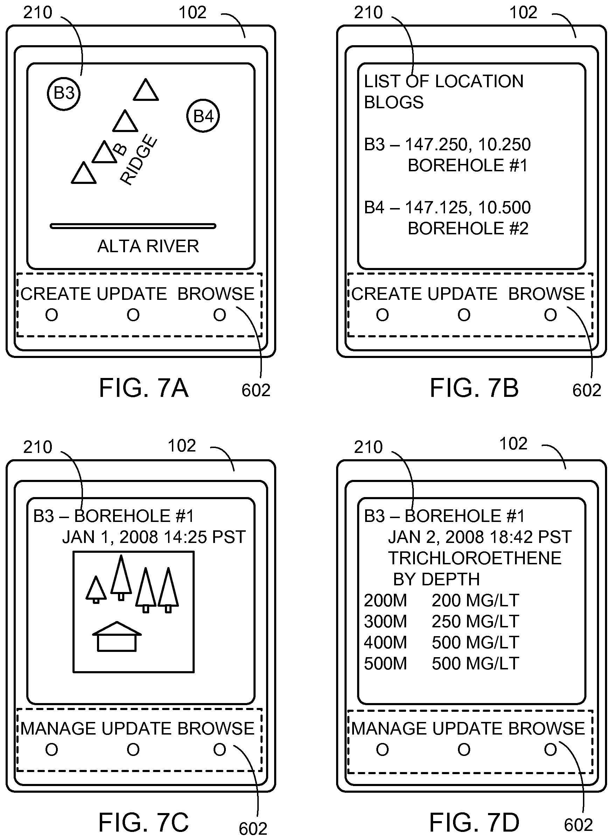

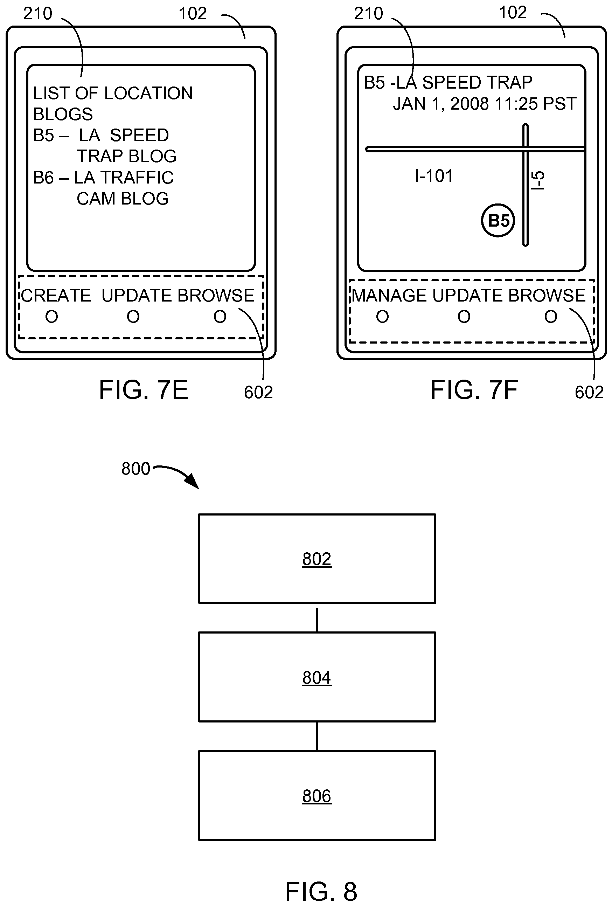

Referring now to FIG. 7A, 7B, 7C, 7D, 7E, and 7F, therein are shown illustrations of an example of retrieving a list of location-blogs and browsing location-blog entries by the client 102 with the general purpose mobile location-blogging system 100 of FIG. 1 for location-blogs B3 and B4. In FIG. 7A, therein is illustrated a set of general purpose location-blogs B3 and B4 used for industrial purposes and displays the location-blogs within a certain radius of a particular location on a map on the multimedia display interface 210 of the client 102 of the general purpose mobile location-blogging system 100 of FIG. 1.

In another example, FIG. 7B illustrates a set of location-blogs within a certain radius of a particular location in a list format on the multimedia display interface 210 of the client 102. For example, either location-blog can be made the current location-blog by selecting the appropriate location-blog using the input means. The client 102 can enter a location-blog selection using the user input control 602 which can include a control input, such as a button, dial, slider, voice input, touch pad, touch screen, virtual button, switch, keypad or similar input device.

In FIG. 7C and 7D, therein are illustrated the multimedia display interface 210 of a location-blog entry for industrial purposes. For example, in an operation with the update location-blog command, the client 102 can accept a location-blog command user input and a multimedia user input that can include a video recording, audio recording, image, text, multimedia data, instrumentation data, or any combination thereof. The location-blog command and the multimedia data are sent to the server 104 in the server request 202. The server 104 can create a new location-blog entry that is associated with the new multimedia data.

For example in FIG. 7C, in the fetch location-blog information command, the client 102 can accept a location-blog command user input and send the fetch location-blog information command in the server request 202 of FIG. 2 to the server 104. The server 104 can retrieve the location-blog entry parameters 204 of FIG. 2 associated with fetch location-blog information command, an image, and return it to the client 102. The client 102 can use the location-blog entry parameters 204 to control the multimedia display interface 210 and present the image of the specified location-blog entry on the multimedia display interface 210.

In FIG. 7D, therein is illustrated, for example, a location-blog entry that includes textual multimedia content entered manually or automatically from a data collection instrument. It is understood that there are several scenarios where the client 102 can send the fetch location-blog information command in the server request 202 to the server 104 and the client 102 can receive one or more location-blog entries including any of several different data types to be shown on the multimedia display interface 210.

In the example shown in FIG. 7E, the multimedia display interface 210 depicts a list of location-blogs B5 and B6. B5 is shown as location speed trap blog. B6 is shown as a traffic camera blog. In FIG. 7F, the B5 location-blog is shown in a map view of the location of the speed trap. The B5 and B6 information can be generated by the client 102 and send to the server 104 for potentially sharing the B5 and the B6 location-blogs.

Referring now to FIG. 8, therein is shown a flow chart of a method 800 of operation of the general purpose mobile location-blogging system 100 in a further embodiment of the present invention. The method 800 includes receiving a location-blog request having multimedia data at a server in a block 802; managing a location-blog entry parameter with the location-blog request in a block 804; sending the location-blog entry parameter from the server in a block 806 for: selecting the location-blog entry parameter at a client, and displaying the location-blog entry parameter that has been selected with a multimedia display interface of the client.

Yet another important aspect of the present invention is that it valuably supports and services the historical trend of reducing costs, simplifying systems, and increasing performance. These and other valuable aspects of the present invention consequently further the state of the technology to at least the next level.

Thus, it has been discovered that the general purpose mobile location-blogging system of the present invention furnishes important and heretofore unknown and unavailable solutions, capabilities, and functional aspects for improving yield, increasing reliability, and reducing cost of using a mobile client having location based services capability. The resulting processes and configurations are straightforward, cost-effective, uncomplicated, highly versatile, accurate, sensitive, and effective, and can be implemented by adapting known components for ready, efficient, and economical manufacturing, application, and utilization.

While the invention has been described in conjunction with a specific best mode, it is to be understood that many alternatives, modifications, and variations can be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

## Claims

1. A method of operation of a general purpose mobile location-blogging system comprising:
receiving a server request (202) at a server (104) from a client (102);
managing a location-blog entry parameter (204) associated with the server request (202) at the server (104); and
sending the location-blog entry parameter (204) from the server (104) to the client (102);
presenting multimedia content of a specified location-blog entry on a multimedia display interface (210) of the client (102), notifying, by the client (102), a user of location-blog coordinates based upon location of the client (102)
selecting the location-blog entry parameter (204) to select a current location blog at the client (102) using an input control (602) including a button, dial, slider, voice input, touch pad, touch screen, virtual button, switch, keypad or similar input device, and
displaying the location-blog entry parameter (204) that has been selected with the multimedia display interface (210) of the client (102); and
**characterized by**:
the location-blog comprising measured and/or instrumentation data associated with a particular location including textual multimedia content entered automatically from a data collection instrument.

2. The method as claimed in claim 1 wherein receiving the server request (202) at the server (104) includes receiving a location-blog request (318) from a user interface (216) at the client (102) for selecting one or more location-blogs and generating the server request (202).

3. The method as claimed in claim 1 wherein receiving the server request (202) includes receiving photos, video, audio, or a combination thereof and text.

4. The method as claimed in claim 1 wherein sending the location-blog entry parameter (204) from the server (104) includes sending a location-blog control parameter (220).

5. The method as claimed in claim 1 wherein sending the location-blog entry parameter (204) from the server (104) includes sending a location-blog data parameter (224).

6. The method as claimed in claim 1 wherein receiving the server request (202) at the server (104) includes:
receiving the server request (202) at a further client (102);
managing the location-blog entry parameter (204) associated with the server request (202) at the further client (102); and
sending the location-blog entry parameter (204) from the further client (102) for controlling the multimedia display interface (210) of the client (102) and notifying the user of location-blog coordinates based upon location of the client (102) for:
selecting the location-blog entry parameter (204) of the location blog as the current location blog at the client (102) using an input control (602) including a button, dial, slider, voice input, touch pad, touch screen, virtual button, switch, keypad or similar input device, and
displaying the location-blog entry parameter (204) that has been selected with the multimedia display interface (210) of the client (102).

7. The method as claimed in claim 1 wherein receiving the server request (202) includes receiving a location-blog request (318) from a user interface (216) at the client (102) for selecting one or more location-blogs and generating the server request (202) for receiving at a further client (102).

8. The method as claimed in claim 1 wherein receiving the server request (202) includes receiving photos, video, audio, or a combination thereof and text at a further client (102).

9. The method as claimed in claim 1 wherein sending the location-blog entry parameter (204) from the server (104) includes sending a location-blog control parameter (220) from a further client (102).

10. The method as claimed in claim 1 wherein sending the location-blog entry parameter (204) from the server (104) includes sending a location-blog data parameter (224) from a further client (102).

## Patentansprüche

1. Verfahren für den Betrieb eines allgemein einsetzbaren mobilen Positions-Blogging Systems, wobei das Verfahren umfasst:
- Erhalten einer Serveranfrage (202) an einem Server (104) von einem Client (102);
- Verwalten eines Positions-Blog-Eintragsparameters (204), welcher der Serveranfrage (202) an dem Server (104) zugeordnet ist; und
- Übersenden des Positions-Blog-Eintragsparameters (204) von dem Server (104) an den Client (102);
- Anzeigen von Multimediainhalten eines vorgegebenen Positions-Blog-Eintrags auf einer Multimedia-Anzeigeschnittstelle (210) des Clients (102),
- Benachrichtigen eines Nutzers über Positions-Blog-Koordinaten abhängig von einer Position des Clients (102) durch den Client (102),
- Auswählen des Positions-Blog-Eintragsparameters (204), um einen aktuellen Positions-Blog durch Verwendung einer Eingabesteuerung (602) an dem Client (102) auszuwählen, wobei die Eingabesteuerung (602) eine Taste, eine Drehscheibe, einen Schieber, eine Spracheingabe, ein Touchpad, ein Touch-Display, einen virtuellen Knopf, einen Schalter, eine Tastatur oder ein ähnliches Eingabegerät umfasst, und
- Anzeigen des ausgewählten Positions-Blog-Eintragsparameters (204) mit der Multimedia-Anzeigeschnittstelle (210) des Clients (102);
wobei das Verfahren **dadurch gekennzeichnet ist, dass**:
- der Positions-Blog gemessene Daten und/oder Instrumentendaten umfasst, welche einer bestimmten Position zugeordnet sind und welche textbasierten Multimediainhalt umfassen, welcher automatisch von einem Datensammlungsgerät eingetragen wurde.

2. Verfahren nach Anspruch 1, wobei das Erhalten der Serveranfrage (202) an dem Server (104) ein Erhalten einer Positions-Blog Anfrage (318) von einer Nutzerschnittstelle (216) an dem Client (102) zum Auswählen eines oder mehrerer Positions-Blogs und zum Erzeugen der Serveranfrage (202) umfasst.

3. Verfahren nach Anspruch 1, wobei das Erhalten der Serveranfrage (202) ein Erhalten von Fotos, Video, Audio oder einer Kombination davon und von Text umfasst.

4. Verfahren nach Anspruch 1, wobei das Übersenden des Positions-Blog-Eintragsparameters (204) von dem Server (104) ein Übersenden eines Positions-Blog-Steuerparameters (220) umfasst.

5. Verfahren nach Anspruch 1, wobei das Übersenden des Positions-Blog Eintragsparameters (204) von dem Server (104) ein Übersenden eines Positions-Blog Datenparameters (224) umfasst.

6. Verfahren nach Anspruch 1, wobei das Erhalten der Serveranfrage (202) an dem Server (104) umfasst:
- Erhalten der Serveranfrage (202) an einem weiteren Client (102);
- Verwalten des Positions-Blog-Eintragsparameters (204), welcher der Serveranfrage (202) zugeordnet ist an dem weiteren Client (102); und
- Übersenden des Positions-Blog-Eintragsparameters (204) von dem weiteren Client (102) zum Steuern der Multimedia-Anzeigeschnittstelle (210) des Clients (102) und zum Benachrichtigen des Nutzers über Positions-Blog-Koordinaten abhängig von der Position des Clients (102), um:
- den Positions-Blog-Eintragsparameter (204) des Positions-Blogs als den aktuellen Positions-Blog an dem Client (102) durch Verwendung einer Eingabesteuerung (602) auszuwählen, wobei die Eingabesteuerung (602) eine Taste, eine Drehscheibe, einen Schieber, eine Spracheingabe, ein Touchpad, ein Touch-Display, einen virtuellen Knopf, einen Schalter, eine Tastatur oder ein ähnliches Eingabegerät umfasst, und
- den Positions-Blog-Eintragsparameter (204), welcher ausgewählt wurde, mit der Multimedia-Anzeigeschnittstelle (210) des Clients (102) anzuzeigen.

7. Verfahren nach Anspruch 1, wobei das Erhalten der Serveranfrage (202) ein Erhalten einer Positions-Blog-Anfrage (318) von einer Nutzerschnittstelle (216) an dem Client (102) zum Auswählen von einem oder mehreren Positions-Blogs und zum Erzeugen der Serveranfrage (202) für ein Empfangen an einem weiteren Client (102) umfasst.

8. Verfahren nach Anspruch 1, wobei das Erhalten der Serveranfrage (202) ein Erhalten von Fotos, Video, Audio, oder einer Kombination davon und von Text an einem weiteren Client (102) umfasst.

9. Verfahren nach Anspruch 1, wobei das Übersenden des Positions-Blog-Eintragsparameters (204) von dem Server (104) ein Übersenden eines Positions-Blog-Steuerparameters (220) von einem weiteren Client (102) umfasst.

10. Verfahren nach Anspruch 1, wobei das Übersenden des Positions-Blog-Eintragsparameters (204) von dem Server (104) ein Übersenden eines Positions-Blog-Datenparameters (224) von einem weiteren Client (102) umfasst.

## Revendications

1. Procédé d'exploitation d'un système de blogging de localisation mobile à usage général comprenant :
la réception d'une requête de serveur (202) au niveau d'un serveur (104) en provenance d'un client (102) ;
la gestion d'un paramètre d'entrée de blog de localisation (204) associé à la requête de serveur (202) au niveau du serveur (104) ; et
l'envoi du paramètre d'entrée de blog de localisation (204) du serveur (104) au client (102) ;
la présentation d'un contenu multimédia d'une entrée de blog de localisation spécifié sur une interface d'affichage multimédia (210) du client (102),
la notification, par le client (102), à un utilisateur, des coordonnées du blog de localisation basées sur la localisation du client (102),
la sélection du paramètre d'entrée de blog de localisation (204) pour sélectionner un blog de localisation courant au niveau du client (102) à l'aide d'un contrôle d'entrée (602) comprenant un bouton, un cadran, un curseur, une entrée vocale, un pavé tactile, un écran tactile, un bouton virtuel, un interrupteur, un clavier ou un dispositif d'entrée similaire et
l'affichage du paramètre d'entrée de blog de localisation (204) qui a été sélectionné avec l'interface d'affichage multimédia (210) du client (102) ; et
**caractérisé par** :
le blog de localisation comprenant des données mesurées et/ou d'instrumentation associées à une localisation particulière comprenant un contenu multimédia textuel entré automatiquement à partir d'un instrument de collecte de données.

2. Procédé selon la revendication 1, dans lequel la réception de la requête de serveur (202) au niveau du serveur (104) comprend la réception d'une requête de blog de localisation (318) en provenance d'une interface utilisateur (216) au niveau du client (102) pour la sélection d'un ou plusieurs blogs de localisation et la génération de la requête de serveur (202).

3. Procédé selon la revendication 1, dans lequel la réception de la requête de serveur (202) comprend la réception de photos, de vidéos, d'audio ou d'une combinaison de ceux- et de texte.

4. Procédé selon la revendication 1, dans lequel l'envoi du paramètre d'entrée de blog de localisation (204) en provenance du serveur (104) comprend l'envoi d'un paramètre de contrôle de blog de localisation (220).

5. Procédé selon la revendication 1, dans lequel l'envoi du paramètre d'entrée de blog de localisation (204) en provenance du serveur (104) comprend l'envoi d'un paramètre de données de blog de localisation (224).

6. Procédé selon la revendication 1, dans lequel la réception de la requête de serveur (202) comprend :
la réception de la requête de serveur (202) au niveau d'un client supplémentaire (102) ;
la gestion du paramètre d'entrée de blog de localisation (204) associé à la requête de serveur (202) au niveau du client supplémentaire (102) ; et
l'envoi du paramètre d'entrée de blog de localisation (204) du client supplémentaire (102) pour le contrôle de l'interface d'affichage multimédia (210) du client (102) et la notification, à l'utilisateur, des coordonnées du blog de localisation basées sur la localisation du client (102) pour :
la sélection du paramètre d'entrée de blog de localisation (204) du blog de localisation en tant que blog de localisation courant au niveau du client (102) à l'aide d'un contrôle d'entrée (602) comprenant un bouton, un cadran, un curseur, une entrée vocale, un pavé tactile, un écran tactile, un bouton virtuel, un interrupteur, un clavier ou un dispositif d'entrée similaire et
l'affichage du paramètre d'entrée de blog de localisation (204) qui a été sélectionné avec l'interface d'affichage multimédia (210) du client (102).

7. Procédé selon la revendication 1, dans lequel la réception de la requête de serveur (202) comprend la réception d'une requête de blog de localisation (318) en provenance d'une interface utilisateur (216) au niveau du client (102) pour la sélection d'un ou plusieurs blogs de localisation et la génération de la requête de serveur (202) pour la réception au niveau d'un client supplémentaire (102).

8. Procédé selon la revendication 1, dans lequel la réception de la requête de serveur (202) comprend la réception de photos, de vidéos, d'audio ou d'une combinaison de ceux- et de texte au niveau d'un client supplémentaire (102).

9. Procédé selon la revendication 1, dans lequel l'envoi du paramètre d'entrée de blog de localisation (204) en provenance du serveur (104) comprend l'envoi d'un paramètre de contrôle de blog de localisation (220) en provenance d'un client supplémentaire (102).

10. Procédé selon la revendication 1, dans lequel l'envoi du paramètre d'entrée de blog de localisation (204) en provenance du serveur (104) comprend l'envoi d'un paramètre de données de blog de localisation (224) en provenance d'un client supplémentaire (102).
